# EUROPEAN PATENT APPLICATION

(11) **EP 4 765 465 A1**
(43) Date of publication of application: **24.06.2026**
(21) Application number: 25861067.4
(22) Date of filing: 07.07.2025
(51) Int. Cl.: H01M 50/60, H01M 50/121, H01M 10/04, H01M 50/178, H01M 50/645

(54) **SECONDARY BATTERY AND METHOD FOR MANUFACTURING SECONDARY BATTERY**

(30) Priority: 26.08.2024 KR 20240114615
(71) Applicant: LG Energy Solution, Ltd., Seoul 07335 (KR)
(72) Inventor: SEON, Sang Ok, Daejeon 34122 (KR); KIM, Jee Won, Daejeon 34122 (KR)
(74) Representative: Goddar, Heinz J.
(86) International application number: PCT/KR2025/009763
(87) International publication number: WO 2026/049269

(57) **Abstract**

The present disclosure relates to a secondary battery capable of being repeatedly charged and discharged and a method for manufacturing such a secondary battery. A secondary battery according to an embodiment of the present disclosure may include an electrode assembly; a case accommodating the electrode assembly; an electrode lead connected to an electrode tab of the electrode assembly and partially protruding to outside of the case; and an elastic body coupled to the case and pressing one side and the other side of the electrode lead.

## Description

### TECHNICAL FIELD

### CROSS-REFERENCE TO RELATED APPLICATIONS

The present application is based on and claims priority from Korean Patent Application No. 10-2024-0114615, filed on August 26, 2024, with the Korean Intellectual Property Office, the disclosure of which is incorporated herein in its entirety by reference.

### TECHNICAL FIELD

The present disclosure relates to a secondary battery capable of being repeatedly charged and discharged and a method for manufacturing such a secondary battery.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may have a structure in which an electrode assembly composed of electrodes and separators is accommodated inside a case. At this time, the secondary battery may be classified into a cylindrical, prismatic, or pouch-type battery depending on the shape of the electrode assembly and the case accommodating the electrode assembly.

In the case of a pouch-type battery, it may be composed of a laminate sheet in which insulating layers are provided on both surfaces or one surface of a metal layer. Specifically, the pouch-type battery may have a structure formed by bonding an upper pouch and a lower pouch composed of a laminate sheet.

In this case, a part of the metal layer of the laminate sheet is inevitably exposed at the sealing portion where the upper and lower pouches are bonded, and when a conductor exists around the secondary battery, there is a problem that a short circuit occurs in the exposed metal layer. Due to the characteristics of the secondary battery, a conductor frame exists around it, and thus there is a need for a case material or structure of the secondary battery that is advantageous for insulation.

### DISCLOSURE

### TECHNICAL PROBLEM

The present disclosure is designed to solve the problems of the related art, and therefore the present disclosure is directed to providing a secondary battery in which a case accommodating an electrode assembly is made of a material advantageous for insulation, and a method for manufacturing such a secondary battery.

### TECHNICAL SOLUTION

A secondary battery according to the present disclosure may include an electrode assembly; a resin case accommodating the electrode assembly; an electrode lead connected to an electrode tab of the electrode assembly and partially protruding to outside of the case; and an elastic body coupled to the case and pressing one side and the other side of the electrode lead.

The elastic body may include a first elastic body provided on one side of the electrode lead; and a second elastic body provided on the other side of the electrode lead.

The first elastic body and the second elastic body may face each other and press the electrode lead.

The first elastic body and the second elastic body may each include a pair of cylindrical rods.

The case may be made of a thermal conductive plastic (TCP) material having high thermal conductivity.

The elastic body may be made of a rubber material.

A through hole allowing the internal space of the case to communicate with the outside may be formed in the case, and an elastic plug may be coupled to the through hole.

A method for manufacturing a secondary battery according to the present disclosure may include a case preparation step of preparing an upper case made of a resin material to which a first elastic body is coupled and a lower case made of a resin material to which a second elastic body is coupled; a placement step of placing an electrode assembly to which an electrode lead is connected between the upper case and the lower case; a sealing step of coupling the upper case and the lower case to seal an accomodation space in which the electrode assembly is accommodated; and an electrolyte injection step of injecting an electrolyte into the accomodation space, wherein in the sealing step, the upper case and the lower case may be coupled to each other while the first elastic body and the second elastic body face each other and press the electrode lead.

The case preparation step may include an upper case preparation step of preparing the upper case by hardening a liquid resin; and a lower case preparation step of preparing the lower case by hardening a liquid resin.

In the upper case preparation step, the first elastic body may be insert-molded into the upper case, and in the lower case preparation step, the second elastic body may be insert-molded into the lower case.

In the sealing step, the upper case and the lower case may be thermally fused to each other.

The electrolyte injection step may include a step of injecting an electrolyte into the accomodation space through an electrolyte injection port formed in the upper case or the lower case; and a step of sealing the electrolyte injection port using an elastic plug.

### Advantageous Effects

A secondary battery according to an embodiment of the present disclosure may include an elastic body coupled to a case made of a resin material and pressing one side and the other side of an electrode lead. Here, the elastic body is coupled to the case and presses both sides of the electrode lead. In this case, the case that accommodates the electrode assembly may be made of a resin material, and thus there is an advantageous effect of preventing a short circuit from occurring due to the surrounding conductor frame. Additionally, the elastic body that presses the electrode lead on both sides is provided, and thus there is an advantageous effect of preventing an electrolyte from leaking into a clearance space between the electrode lead and the case.

### DESCRIPTION OF DRAWINGS

FIG. 1 is a view for describing the structure of a secondary battery according to the present disclosure.
FIG. 2 is a view showing a state in which a secondary battery according to the present disclosure is provided in a battery module.
FIG. 3 is a flowchart sequentially showing each step of a method for manufacturing a secondary battery according to the present disclosure.
FIG. 4 is a flowchart specifically showing a preparation step of preparing an upper case and a lower case in a method for manufacturing a secondary battery according to the present disclosure.
FIG. 5 is a flowchart specifically showing an electrolyte injection step of injecting an electrolyte into a case in a method for manufacturing a secondary battery according to the present disclosure.
FIG. 6 is a view for describing in detail a state in which an upper case and a lower case are coupled in a method for manufacturing a secondary battery according to the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery and a method for manufacturing a secondary battery according to the present disclosure will be described with reference to the drawings.

### Secondary battery

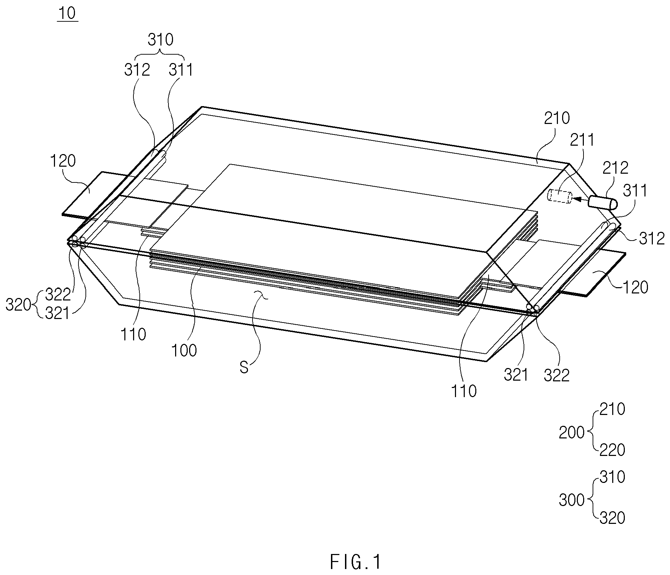

FIG. 1 is a view for describing the structure of a secondary battery according to the present disclosure.

Referring to FIG. 1, a secondary battery 10 according to the present disclosure may include an electrode assembly 100; a resin case 200 accommodating the electrode assembly 100; an electrode lead 120 connected to an electrode tab 110 of the electrode assembly 100 and partially protruding to outside of the case 200; and an elastic body 300 coupled to the case 200 and pressing one side and the other side of the electrode lead 120.

The electrode assembly 100 is composed of a plurality of electrodes and separators, and may have various structures. For example, the electrode assembly 100 may have a stacked structure in which a plurality of electrodes and separators are alternately stacked, or a stack-folding type structure in which a plurality of electrodes and separators are alternately stacked and then folded. Additionally, the electrode assembly 100 may have a jelly-roll type structure in which a plurality of electrodes and separators are alternately stacked and then wound.

The electrode tab 110 is formed on each of the plurality of electrodes constituting the electrode assembly 100, and the electrode uncoated portion of the electrodes that is not coated with an active material may correspond to this. Additionally, the electrode tab 110 may have a separate conductor rod or conductor sheet structure coupled to each of the plurality of electrodes constituting the electrode assembly 100.

The electrode tabs 110 may be provided in the same number as the electrodes included in the electrode assembly 100. The electrode tabs 110 may be welded together to form an electrode tab bundle. At this time, the positive electrode tabs may be welded to each other, and the negative electrode tabs may be welded to each other.

The electrode lead 120 is coupled to the electrode tabs 110 to electrically connect the electrode assembly 100 to an external device, and may be configured in various ways. For example, the electrode lead 120 is a conductor rod or conductor sheet made of the same material as the electrode tab 110, and may be welded to the electrode tab bundle where the electrode tabs 110 are coupled.

The case 200 is an exterior material that accommodates the electrode assembly 100, and may be configured in various ways. For example, the case 200 is a combined body in which an upper case 210 and a lower case 220 are coupled, and a sealed accomodation space S for accommodating the electrode assembly 100 may be provided inside the upper case 210 and the lower case 220.

The upper case 210 and the lower case 220 may be made of the same material. In particular, the upper case 210 and the lower case 220 may be made of a resin material. When the upper case 210 and the lower case 220 are made of a resin material, a metal material is not included in the case 200 accommodating the electrode assembly 100, and thus even when a conductor frame is positioned around the secondary battery 10, no short circuit occurs in the case 200 of the secondary battery 10.

When the upper case 210 and the lower case 220 are made of a resin material, the upper case 210 and the lower case 220 may be coupled in various ways. For example, the surfaces of the upper case 210 and the lower case 220 facing each other may be thermally fused to be coupled to each other.

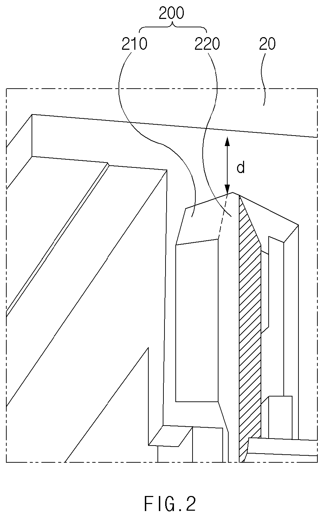

FIG. 2 is a view showing a state in which a secondary battery according to the present disclosure is provided in a battery module. FIG. 2 illustrates a state in which a secondary battery 10 according to the present disclosure is provided inside a housing 20 of the battery module.

Referring to FIG. 2, the case 200 of the secondary battery 10 and the housing 20 of the battery module are spaced apart by a predetermined distance (d). At this time, the housing 20 of the battery module may be made of a metal material. The case 200 is made of a resin material rather than metal, and thus even when the distance (d) between the case 200 and the housing 20 is small, no short circuit occurs between the case 200 and the housing 20.

In this case, the secondary battery 10 may be disposed close to the housing 20 of the battery module, and thus there is an advantageous effect of improving the energy density of the battery module by minimizing dead space inside the housing 20.

Meanwhile, the elastic body 300 is coupled to the case 200, and may be configured to press both one surface and the other surface of the electrode lead 120. Specifically, the elastic body 300 may be composed of a first elastic body 310 provided on one side of the electrode lead 120 and a second elastic body 320 provided on the other side of the electrode lead 120.

The first elastic body 310 may be inserted into the lower end of the upper case 210, and the second elastic body 320 may be inserted into the upper end of the lower case 220. When the upper case 210 and the lower case 220 are coupled to form a sealing space S, the first elastic body 310 and the second elastic body 320 may face each other and press each other.

At this time, an electrode lead 120 may be provided between the first elastic body 310 and the second elastic body 320. That is, the first elastic body 310 and the second elastic body 320 may face each other and press the electrode lead 120.

Specifically, the electrode lead 120 formed of a conductor may be exposed to the outside through a sealing portion where the upper case 210 and the lower case 220 are fused. The upper case 210 and the lower case 220 are made of a resin material, and thus a predetermined clearance may exist between the electrode lead 120 and the upper case 210 and between the electrode lead 120 and the lower case 220, respectively.

At this time, the first elastic body 310 and the second elastic body 320 may be provided at the sealing portion where the upper case 210 and the lower case 220 are fused to press the upper surface and the lower surface of the electrode lead 120. That is, the first elastic body 310 and the second elastic body 320 may eliminate the clearance formed between the electrode lead 120 and the upper case 210 and between the electrode lead 120 and the lower case 220.

As such, the secondary battery 10 according to the present disclosure is provided with the first and second elastic bodies 310, 320, and thus there is an advantageous effect of preventing the electrolyte from leaking between the electrode lead 120 and the upper case 210 and between the electrode lead 120 and the lower case 220.

Additionally, the first elastic body 310 and the second elastic body 320 may be made of a rubber material whose shape changes when pressed above a predetermined pressure. The first elastic body 310 and the second elastic body 320 made of a rubber material may be inserted into the upper case 210 and the lower case 220 in various ways.

When the upper case 210 and the lower case 220 are manufactured by hardening a liquid resin, the mold for manufacturing the upper case 210 may be provided with the first elastic body 310. Similarly, the mold for manufacturing the lower case 220 may be provided with the second elastic body 320.

Specifically, when a liquid resin is injected into the mold including the first elastic body 310 and then this liquid resin hardens, the upper case 210 with the first elastic body 310 inserted into one end may be prepared. Additionally, when a liquid resin is injected into the mold including the second elastic body 320 and then this liquid resin hardens, the lower case 220 with the second elastic body 320 inserted into one end may be prepared.

Meanwhile, the first elastic body 310 and the second elastic body 320 may have various shapes and structures. For example, the first elastic body 310 may include a pair of cylindrical rods 311, 312 spaced apart from each other. Likewise, the second elastic body 320 may also include a pair of cylindrical rods 321, 322 spaced apart from each other.

Here, the rod 311 provided on the inner side of the first elastic body 310 may face the rod 321 provided on the inner side of the second elastic body 320. Additionally, the rod 312 provided on the outer side of the first elastic body 310 may face the rod 322 provided on the outer side of the second elastic body 320.

In this way, when the first elastic body 310 and the second elastic body 320 are each composed of a pair of cylindrical rods, the pressure surface where the first elastic body 310 and the second elastic body 320 press the electrode lead 120 may be a curved surface. In this case, since no angled tip is formed in the pressure surface where the electrode lead 120 is pressed, there is an advantageous effect of preventing the electrode lead 120 from being damaged by the first elastic body 310 and the second elastic body 320.

Meanwhile, the case 200 that accommodates the electrode assembly 100 may be made of a material with high thermal conductivity. For example, the case 200 may be made of a thermal conductive plastic (TCP) material. When the case 200 is made of a TCP material, heat may be easily dissipated to the surroundings, thereby delaying the rise in the internal temperature of the secondary battery 10 during charging and discharging of the secondary battery 10.

Additionally, a through hole 211 allowing the internal space S of the case 200 to communicate with the outside may be formed in the case 200, and an elastic plug 212 may be coupled to this through hole 211. Specifically, a through hole 211 allowing the accomodation space S for accommodating the electrode assembly 100 to communicate with the outside may be formed in the upper case 210 or the lower case 220.

This through hole 211 may be used for various purposes. For example, the through hole 211 may be used as an electrolyte injection port for injecting an electrolyte into the accomodation space S. Once the injection of electrolyte is completed, a plug 212 is inserted into the through hole 211, and the accomodation space S may be sealed.

This plug 212 may be made of an elastic body having substantially the same size as the through hole 211 or a slightly larger size than the through hole 211. For example, the plug 212 may be made of a rubber material, similar to the elastic body 300 described above.

### Method for manufacturing secondary battery

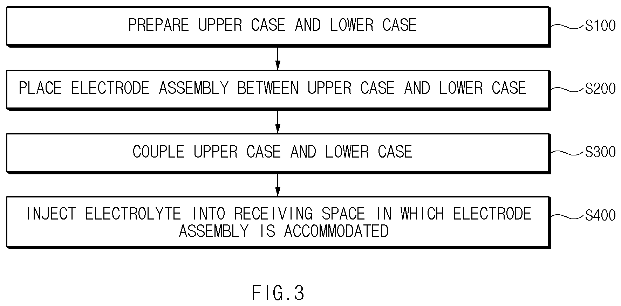

FIG. 3 is a flowchart sequentially showing each step of a method for manufacturing a secondary battery according to the present disclosure.

Referring to FIG. 3, a method for manufacturing a secondary battery according to the present disclosure may include a case preparation step (S100) of preparing an upper case 210 made of a resin material to which a first elastic body 310 is coupled and a lower case 220 made of a resin material to which a second elastic body 320 is coupled; a placement step (S200) of placing an electrode assembly 100 to which an electrode lead 120 is connected between the upper case 210 and the lower case 220; a sealing step (S300) of coupling the upper case 210 and the lower case 220 to seal an accomodation space S in which the electrode assembly 100 is accommodated; and an electrolyte injection step (S400) of injecting an electrolyte into the accomodation space S.

In this case, the upper case 210 and the lower case 220 are made of a resin material, and thus the case 200 that accommodates the electrode assembly 100 does not include a metal material. Therefore, the secondary battery 10 manufactured by the method for manufacturing a secondary battery has an advantageous effect of preventing a short circuit from occurring in the case 200 even when a conductor frame is positioned around it.

Meanwhile, in the sealing step (S300) of the method for manufacturing a secondary battery, the upper case 210 and the lower case 220 may be coupled to each other while the first elastic body 310 and the second elastic body 320 face each other and press the electrode lead 120. That is, the first elastic body 310 and the second elastic body 320 may eliminate the clearance formed between the electrode lead 120 and the upper case 210 and between the electrode lead 120 and the lower case 220.

Therefore, in the case of the secondary battery 10 manufactured according to the method for manufacturing a secondary battery, it is possible to prevent an electrolyte from leaking between the electrode lead 120 and the upper case 210 and between the electrode lead 120 and the lower case 220.

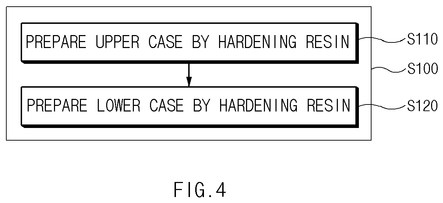

FIG. 4 is a flowchart specifically showing a preparation step of preparing an upper case and a lower case in a method for manufacturing a secondary battery according to the present disclosure.

Referring to FIG. 4, the case preparation step (S100) may include an upper case preparation step (S110) of preparing the upper case 210 by hardening a liquid resin; and a lower case preparation step (S120) of preparing the lower case 220 by hardening a liquid resin.

A resin made of a material with high thermal conductivity may be used for the liquid resin used in the upper case preparation step (S110) and the lower case preparation step (S120). For example, a liquid resin made of a thermal conductive plastic (TCP) material may be used in the upper case preparation step (S110) and the lower case preparation step (S120).

At this time, the upper case 210 and the lower case 220 formed by hardening the TCP material are easy to dissipate heat to the surroundings, thereby delaying the rise in the internal temperature of the secondary battery 10 during charging and discharging of the secondary battery 10.

Meanwhile, in the upper case preparation step (S110), the first elastic body 310 may be insert-molded into the upper case 210, and in the lower case preparation step (S120), the second elastic body 320 may be insert-molded into the lower case 220. Specifically, when a liquid resin is injected into a mold including a first elastic body 310 and then the liquid resin hardens, an upper case 210 with the first elastic body 310 inserted into one end may be manufactured. Additionally, when a liquid resin is injected into a mold including a second elastic body 320 and then the liquid resin hardens, a lower case 220 with the second elastic body 320 inserted into one end may be manufactured.

As such, when an insert injection molding process is used, there is an advantageous effect that the first elastic body 310 and the second elastic body 320 may be easily coupled to the upper case 210 and the lower case 220, respectively.

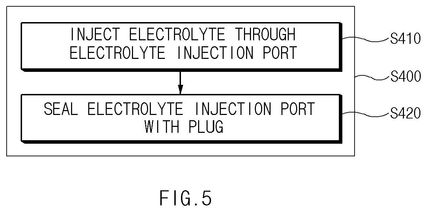

FIG. 5 is a flowchart specifically showing an electrolyte injection step of injecting an electrolyte into a case in a method for manufacturing a secondary battery according to the present disclosure.

Referring to FIG. 5, the electrolyte injection step (S400) may include a step (S410) of injecting an electrolyte into an accomodation space S in which the electrode assembly 100 is accommodated through an electrolyte injection port 211 formed in the upper case 210 or the lower case 220; and a step (S420) of sealing the electrolyte injection port 211 using an elastic plug 212.

Here, the electrolyte injection port 211 is formed in the upper case 210 or the lower case 220, and may be a through hole that allows the accomodation space S accommodating the electrode assembly 100 to communicate with the outside. Additionally, the plug 212 inserted into the electrolyte injection port 211 may be made of an elastic body having substantially the same size as the electrolyte injection port 211 or a slightly larger size than the electrolyte injection port 211. For example, the plug 212 may be made of a rubber material.

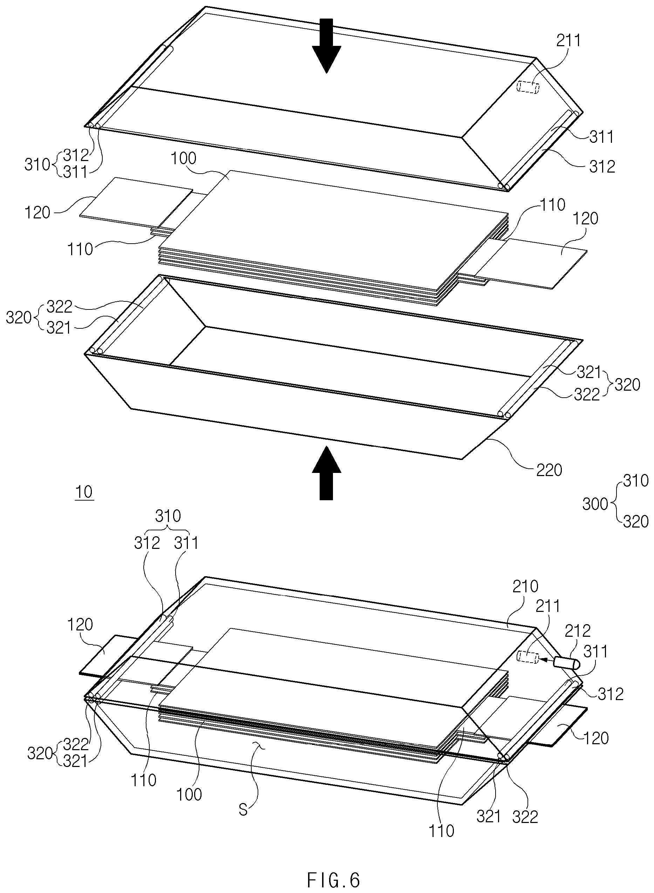

FIG. 6 is a view for describing in detail a state in which an upper case and a lower case are coupled in a method for manufacturing a secondary battery according to the present disclosure.

Referring to FIG. 6, in the sealing step (S300) where the upper case 210 and the lower case 220 are coupled, the terrace portion of the upper case 210 and the terrace portion of the lower case 220 may be bonded while facing each other. At this time, the first elastic body 310 may be provided in a part of the terrace portion of the upper case 210, and the second elastic body 320 may be provided in a part of the terrace portion of the lower case 220.

In the sealing step (S300), the upper case 210 and the lower case 220 may be coupled so that the first elastic body 310 and the second elastic body 320 described above face each other. Specifically, the upper case 210 and the lower case 220 made of a resin material are thermally fused to each other, and the first elastic body 310 and the second elastic body 320 inserted into each of the upper case 210 and the lower case 220 may press the electrode lead 120 provided between the upper case 210 and the lower case 220 so that the accomodation space S described above is sealed.

The first elastic body 310 and the second elastic body 320 may be configured in various ways. For example, the first elastic body 310 may include a pair of cylindrical rods 311, 312 spaced apart from each other. Likewise, the second elastic body 320 may also include a pair of cylindrical rods 321, 322 spaced apart from each other.

Here, the rod 311 provided on the inner side of the first elastic body 310 may face the rod 321 provided on the inner side of the second elastic body 320. Additionally, the rod 312 provided on the outer side of the first elastic body 310 may face the rod 322 provided on the outer side of the second elastic body 320.

In this way, when the first elastic body 310 and the second elastic body 320 are each composed of a pair of cylindrical rods, the pressure surface where the first elastic body 310 and the second elastic body 320 press the electrode lead 120 may be a curved surface. In this case, since no angled tip is formed in the pressure surface where the electrode lead 120 is pressed, there is an advantageous effect of preventing the electrode lead 120 from being damaged by the first elastic body 310 and the second elastic body 320.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

**[List of Reference Numerals]**

| | | | |
|---|---|---|---|
| 10: | Secondary battery | 100: | Electrode assembly |
| 110: | Electrode tab | 120: | Electrode lead |
| 200: | Case | 210: | Upper case |
| 211: | Through hole | 212: | Plug |
| 220: | Lower case | 300: | Elastic body |
| 310: | First elastic body | 320: | Second elastic body |
| S100: | Case preparation step | S200: | Placement step |
| S300: | Sealing step | S400: | Electrolyte injection step |

## Claims

1. A secondary battery comprising:
an electrode assembly;
a resin case accommodating the electrode assembly;
an electrode lead connected to an electrode tab of the electrode assembly and partially protruding to outside of the case; and
an elastic body coupled to the case and pressing one side and the other side of the electrode lead.

2. The secondary battery according to claim 1,
wherein the elastic body comprises:
a first elastic body provided on one side of the electrode lead; and
a second elastic body provided on the other side of the electrode lead.

3. The secondary battery according to claim 2,
wherein the first elastic body and the second elastic body face each other and press the electrode lead.

4. The secondary battery according to claim 2,
wherein the first elastic body and the second elastic body each comprise a pair of cylindrical rods.

5. The secondary battery according to claim 4,
wherein the case is made of a thermal conductive plastic (TCP) material having high thermal conductivity.

6. The secondary battery according to claim 1,
wherein the elastic body is made of a rubber material.

7. The secondary battery according to claim 1,
wherein a through hole allowing the internal space of the case to communicate with the outside is formed in the case, and an elastic plug is coupled to the through hole.

8. A method for manufacturing a secondary battery, comprising:
a case preparation step of preparing an upper case made of a resin material to which a first elastic body is coupled and a lower case made of a resin material to which a second elastic body is coupled;
a placement step of placing an electrode assembly to which an electrode lead is connected between the upper case and the lower case;
a sealing step of coupling the upper case and the lower case to seal an accomodation space in which the electrode assembly is accommodated; and
an electrolyte injection step of injecting an electrolyte into the accomodation space,
wherein in the sealing step, the upper case and the lower case are coupled to each other while the first elastic body and the second elastic body face each other and press the electrode lead.

9. The method for manufacturing a secondary battery according to claim 8,
wherein the case preparation step comprises:
an upper case preparation step of preparing the upper case by hardening a liquid resin; and
a lower case preparation step of preparing the lower case by hardening a liquid resin.

10. The method for manufacturing a secondary battery according to claim 9,
wherein in the upper case preparation step, the first elastic body is insert-molded into the upper case, and
wherein in the lower case preparation step, the second elastic body is insert-molded into the lower case.

11. The method for manufacturing a secondary battery according to claim 8,
wherein in the sealing step, the upper case and the lower case are thermally fused to each other.

12. The method for manufacturing a secondary battery according to claim 8,
wherein the electrolyte injection step comprises:
a step of injecting an electrolyte into the accomodation space through an electrolyte injection port formed in the upper case or the lower case; and
a step of sealing the electrolyte injection port using an elastic plug.
